# EUROPEAN PATENT APPLICATION

(11) **EP 4 600 837 A1**
(43) Date of publication of application: **13.08.2025**
(21) Application number: 24869691.6
(22) Date of filing: 23.04.2024
(51) Int. Cl.: G06F 15/16, G06F 1/16, G06F 1/18, G06F 1/20

(54) **MULTI-NODE SERVER ARCHITECTURE**

(30) Priority: 26.09.2023 CN 202311247520
(71) Applicant: Suzhou Metabrain Intelligent Technology Co., Ltd., Suzhou, Jiangsu 215000 (CN)
(72) Inventor: LI, Yiqun, Suzhou, Jiangsu 215000 (CN); YU, Shimao, Suzhou, Jiangsu 215000 (CN)
(74) Representative: von Bülow & Tamada
(86) International application number: PCT/CN2024/089401
(87) International publication number: WO 2025/066122

(57) **Abstract**

The present disclosure discloses a multi-node server architecture, which relates to the field of server technologies. In order to solve the problem of how to reduce the usage amount of data cables and perform separate maintenance of nodes, the architecture includes a server chassis, a central processing unit node detachably mounted in the server chassis, a data switching node detachably mounted in the server chassis, a graphics processing unit node detachably mounted in the server chassis and a middle backplane module mounted in the server chassis, wherein the middle backplane module is provided with a first connector, a plurality of second connectors and a plurality of third connectors which are interconnected by signals, the central processing unit node is inserted into and matched with the first connector, the data switching node is inserted into and matched with the plurality of second connectors, and the graphics processing unit node is inserted into and matched with the plurality of third connectors. According to the present disclosure, the usage amount of data cables may be reduced as much as possible, separate dismounting, mounting and maintenance operations of each node may be performed conveniently and quickly, the flexible configuration of each node may be realized, and the heat dissipation performance may be ensured at the same time.

## Description

### CROSS-REFERENCE TO RELATED APPLICATION

This application claims the priority of the Chinese Patent application filed on September 26, 2023 before the CNIPA, China National Intellectual Property Administration with the application number of 202311247520.8, and the title of "MULTI-NODE SERVER ARCHITECTURE", which is incorporated herein in its entirety by reference.

### FIELD

The present disclosure relates to the field of server technologies, in particular to a multi-node server architecture.

### BACKGROUND

A server is an important part of an electronic device and is mainly used to provide computing service. According to different service types provided by the server, the server is mainly classified into a file server, a storage server, a database server, an application program server, a web server, and the like.

In the era of big data, a large number of information technology (IT) devices are centrally placed in a data center. Devices in the data center mainly include various types of servers, storage devices, switches, cabinets, and other infrastructures. Each IT device is composed of various hardware board cards, for example, a computing module, a storage module, a chassis, a heat dissipation module, and the like.

At present, thanks to the development of artificial intelligence (AI) technologies, the demand for computing power of various enterprises and scientific research institutions is increasing day by day, and artificial intelligence servers with powerful computing power have emerged as the times require. An artificial intelligence server mainly uses a graphics processing unit (GPU) node to provide computing services, it is equipped with a central processing unit (CPU) node for control and a data switching (Switch) node for data switching between nodes.

In the related art, there are two main solutions for the graphics processing unit of the artificial intelligence server, namely, a peripheral component interconnect express (PCIE) card and an onboard graphics processing unit. In the case of the same internal space of the chassis, compared with the PCIE card solution, the onboard graphics processing unit solution has higher integration, less space occupation, more graphics processing unit chips and higher computing power density. Since the onboard graphics processing unit has a relatively large overall size, the artificial intelligence server is a multi-node architecture when selecting the onboard graphics processing unit solution, which further puts forward higher requirements for the maintainability of the server.

However, in the related art, different nodes of the artificial intelligence server are commonly interconnected by data cables, resulting in relatively large usage amount of data cables. The wiring in the server chassis occupies a lot of installation space, resulting in troublesome dismounting and mounting operation of each node in the server chassis; in addition, it is necessary to perform insertion and extraction operation on the data cables at both ends of each node repeatedly during maintenance, resulting in a heavy workload, and making it difficult to perform separate dismounting, mounting and maintenance operations of each node. Meanwhile, it is also difficult to flexibly configure each node, thereby failing to meet different configuration requirements of different users for the artificial intelligence server. In addition, a large number of data cables occupy a ventilation area, which may further decrease the heat dissipation performance of the server.

Therefore, how to reduce the usage amount of data cables as much as possible, perform separate dismounting, mounting and maintenance operations of each node conveniently and quickly, realize the flexible configuration of each node, and ensure the heat dissipation performance at the same time is a technical problem faced by a person skilled in the art.

### SUMMARY

The purpose of the present disclosure is to provide a multi-node server architecture, which may reduce the usage amount of data cables as much as possible, conveniently and quickly perform separate dismounting, mounting and maintenance operations of each node, realize the flexible configuration of each node, and ensure the heat dissipation performance at the same time.

In order to solve the above technical problems, the present disclosure provides a multi-node server architecture, including: a server chassis, a central processing unit node detachably mounted in the server chassis, a data switching node detachably mounted in the server chassis, a graphics processing unit node detachably mounted in the server chassis and a middle backplane module mounted in the server chassis, where the middle backplane module is provided with a first connector, a plurality of second connectors and a plurality of third connectors which are interconnected by signals, the central processing unit node is inserted into and matched with the first connector, the data switching node is inserted into and matched with the plurality of second connectors, and the graphics processing unit node is inserted into and matched with the plurality of third connectors.

In some specific embodiments, the central processing unit node, the data switching node and the graphics processing unit node are hierarchically distributed in a vertical direction in the server chassis; and the first connector, the plurality of second connectors and the plurality of third connectors are hierarchically distributed in the vertical direction on the middle backplane module.

In some specific embodiments, the multi-node server architecture further includes a plurality of power modules and a plurality of heat dissipation modules which are detachably mounted in the server chassis, where the middle backplane module is further provided with a plurality of power connectors and a plurality of heat dissipation control connectors, the plurality of power modules are inserted into and matched with the plurality of power connectors, and the plurality of heat dissipation modules are inserted into and matched with the plurality of heat dissipation control connectors.

In some specific embodiments, each of the plurality of heat dissipation modules includes a heat dissipation fan and a fan backplane, where the heat dissipation fan is in signal connection with the fan backplane, and the fan backplane is inserted into and matched with one of the plurality of heat dissipation control connectors.

In some specific embodiments, the server chassis includes a first mounting cavity located at a front side of the middle backplane module and a second mounting cavity located at a rear side of the middle backplane module, where the central processing unit node, the data switching node and the graphics processing unit node are all mounted in the first mounting cavity, and the plurality of power modules and the plurality of heat dissipation modules are both mounted in the second mounting cavity.

In some specific embodiments, a first mounting rail assembly, a second mounting rail assembly and a third mounting rail assembly are disposed on a side wall of the server chassis in the first mounting cavity, where the central processing unit node is slidably disposed on the first mounting rail assembly, the data switching node is slidably disposed on the second mounting rail assembly, and the graphics processing unit node is slidably disposed on the third mounting rail assembly.

In some specific embodiments, part or all of the first mounting rail assembly, the second mounting rail assembly and the third mounting rail assembly are guide rails extending along a depth dimension direction of the server chassis or a plurality of rollers distributed in the depth dimension direction of the server chassis.

In some specific embodiments, the first mounting cavity is further provided with a mounting tray connected to two side walls of the server chassis, where the mounting tray is configured to support the data switching node.

In some specific embodiments, a plurality of power bins are disposed on a side wall of the server chassis in the second mounting cavity, a plurality of heat dissipation bins are disposed between two side walls of the server chassis in the second mounting cavity, where the plurality of power modules are slidably inserted into the plurality of power bins in a vertical posture, and the plurality of heat dissipation modules are slidably inserted into the plurality of heat dissipation bins.

In some specific embodiments, an inner wall of each of the plurality of heat dissipation bins is connected to an elastic baffle, where the elastic baffle is configured to seal the heat dissipation bin corresponding to the elastic baffle by means of elastic restoration when one of the plurality of the heat dissipation modules is extracted.

In some specific embodiments, the central processing unit node includes a first base and a first mainboard disposed in the first base, where a rear end of the first mainboard is provided with a first node connector, and the first node connector is configured to be connected to the first connector.

In some specific embodiments, the central processing unit node further includes a first front window disposed at a front end of the first base, and a side of the first front window is provided with a first operating handle which is rotatable.

In some specific embodiments, the data switching node includes a second base and a second mainboard disposed in the second base, where a rear end of the second mainboard is provided with a plurality of second node connectors, and the plurality of the second node connectors are configured to be connected to the plurality of second connectors.

In some specific embodiments, the data switching node further includes a function extension module disposed in the second base, and a front end of the second mainboard is provided with an extension connector, where the function extension module is inserted into and matched with the extension connector.

In some specific embodiments, an outer side wall of the second base is provided with a second slide rail extending along a depth dimension direction of the second base, and the second slide rail is configured to cooperate with a second mounting rail assembly disposed on a side wall of the server chassis.

In some specific embodiments, a front end of the side wall of the second base is provided with a second transitional connecting plate, where the second transitional connecting plate is provided with a second operating handle which is tiltable, and a second limiting post configured to abut against the second operating handle at a preset tilting position.

In some specific embodiments, the graphics processing unit node includes a third base and a third mainboard disposed in the third base, where a rear end of the third mainboard is provided with a plurality of third node connectors, and the plurality of third node connectors are configured to be connected to the plurality of third connectors.

In some specific embodiments, the graphics processing unit node further includes a third top cover inverted on the third base, where both sides of the third base are vertically provided with low folded edges, and side plates on both sides of the third top cover are detachably connected to the low folded edges corresponding to the side plates respectively.

In some specific embodiments, an outer side wall of the third base is provided with a third slide rail extending along a depth dimension direction of the third base, and the third slide rail is configured to cooperate with a third mounting rail assembly disposed on a side wall of the server chassis.

In some specific embodiments, a front end of a side wall of the third base is provided with a third transitional connecting plate, where the third transitional connecting plate is provided with a third operating handle which is tiltable, and a third limiting post configured to abut against the third operating handle at a preset tilting position.

In some specific embodiments, a front end of the third base is provided with a third front window, and the third operating handle is provided with a locking member detachably connected to the third front window and configured to lock the third operating handle on the third front window when the third operating handle is not tilted.

In some specific embodiments, the third transitional connecting plate is further provided with an elastic member connected to a rotating shaft of the third operating handle and configured to pretilt the third operating handle by a preset angle through an elastic force when the locking member is unlocked.

In some specific embodiments, a locking pin which is pressable is protruding from an outer wall of a side plate of the third top cover, a limiting block is protruding from an inner side wall of the server chassis, and the limiting block is configured to abut against the locking pin.

In some specific embodiments, an inner end of the locking pin is connected to an elastic strip, one end of the elastic strip is connected to an inner wall of the side plate of the third top cover, a limiting plate is disposed on the other end of the elastic strip on the inner wall of the side plate of the third top cover, and the limiting plate is configured to abut against the other end of the elastic strip.

In some specific embodiments, the middle backplane module includes a front backplane and a rear backplane which are connected into a whole, where the first connector, the plurality of second connectors, and the plurality of third connectors are all disposed on the front backplane, and the plurality of power connectors and the plurality of heat dissipation control connectors are all disposed on the rear backplane.

The multi-node server architecture provided by the present disclosure mainly includes the server chassis, the central processing unit node, the data switching node, the graphics processing unit node and the middle backplane module. The server chassis is a main component of the server architecture and is mainly configured to mount and carry other server components. The central processing unit node is mounted in the server chassis and is detachably connected to the server chassis, that is, insertion and mounting operation and extraction and dismounting operation may be realized by performing reciprocating linear movement in the server chassis, thereby facilitating the dismounting and mounting operation on the server chassis. The central processing unit node is mainly configured to realize data switching, global control and other functions. The graphics processing unit node is mounted in the server chassis and is detachably connected to the server chassis, that is, insertion and mounting operation and extraction and dismounting operation may be realized by performing reciprocating linear movement in the server chassis, thereby facilitating the dismounting and mounting operation on the server chassis. The graphics processing unit node is mainly configured to perform AI graphic data computation. The data switching node is mounted in the server chassis and is detachably connected to the server chassis, that is, insertion and mounting operation and extraction and dismounting operation may be realized by performing reciprocating linear movement in the server chassis, thereby facilitating the dismounting and mounting operation on the server chassis. The data switching node is mainly configured to implement data interaction and communication between the central processing unit node and the graphics processing unit node, that is, the central processing unit node and the graphics processing unit node do not directly communicate with each other, but communicate indirectly through the data switching node. The middle backplane module is also mounted in the server chassis, and mainly configured to implement unified data transfer between the central processing unit node and the data switching node and between the graphics processing unit node and the data switching node. The middle backplane module is provided with the first connector, the second connectors and the third connectors, and the first connector, the second connectors and the third connectors are interconnected by signals. The first connector is mainly configured to insert into and match with the central processing unit node, thereby realizing the signal connection between the central processing unit node and the middle backplane module; the second connectors are mainly configured to insert into and match with the data switching node, thereby realizing the signal connection between the data switching node and the middle backplane module; and the third connectors are mainly configured to insert into and match with the graphics processing unit node, thereby realizing the signal connection between the graphics processing unit node and the middle backplane module.

The present disclosure has beneficial effects as follows: since the central processing unit node, the data switching node and the graphics processing unit node are all detachably connected to the server chassis, and the central processing unit node, the data switching node and the graphics processing unit node are respectively inserted into and matched with the first connector, the second connectors and the third connectors and are also connected to the middle backplane module by signals, indirect data communication between the central processing unit node and the graphics processing unit node is realized by using the middle backplane module and the data switching node, so that there is basically no need to use any data cables for interconnection between the nodes, and thus on one hand, the usage amount of data cables may be reduced as much as possible, thereby overcoming the problem that the data cables occupy the ventilation area and ensuring heat dissipation performance; and on the other hand, the central processing unit node, the data switching node and the graphics processing unit node may be conveniently detached from the first connector, the second connectors and the third connectors respectively, so that the central processing unit node, the data switching node and the graphics processing unit node may be separately extracted from the server chassis, and then separate dismounting, mounting and maintenance operations of each node may be performed conveniently and quickly, thereby realizing the flexible configuration of each node.

In addition, in some specific embodiments, after the third top cover in the graphics processing unit node is connected to the low folded edges, the entire graphics processing unit node forms an inverted structure. The third mainboard carrying a GPU chip may be directly mounted in the third base vertically from top to bottom and fixed by fasteners such as screws during an assembly process, without other horizontal sliding movements or additional mounting operations; finally, the third top cover is inverted on the low folded edges to complete the assembly. The height of the side wall of the third base has a relatively low, which may reduce the mounting stroke and simplify the mounting steps of the third mainboard, thereby improving the assembly production efficiency of production lines. Meanwhile, the third mainboard is easy to disassemble, thereby having better maintainability, and further reducing the probability of bumping risk in the assembly process of the third mainboard.

To sum up, the multi-node server architecture provided by the present disclosure may reduce the usage amount of data cables as much as possible, conveniently and quickly perform separate dismounting, mounting and maintenance operations of each node, realize the flexible configuration of each node, and ensure the heat dissipation performance at the same time.

### BRIEF DESCRIPTION OF THE DRAWINGS

In order to more clearly explain the technical solutions in the embodiments of the present disclosure, accompanying drawings that are required to be used in the embodiments or the related art will be briefly introduced below. Obviously, the accompanying drawings described below are merely some embodiments of the present disclosure, and a person skilled in the art may obtain other accompanying drawings according to these accompanying drawings without paying creative labor.
FIG. 1 is an exploded view of a whole structure of some specific embodiments according to the present disclosure.
FIG. 2 is a schematic diagram of a whole structure of some specific embodiments according to the present disclosure.
FIG. 3 is a schematic diagram of another viewing angle of FIG. 2.
FIG. 4 is a schematic structural diagram of a front end of a server chassis.
FIG. 5 is a schematic structural diagram after removing a mounting tray in FIG. 4.
FIG. 6 is a schematic structural diagram of a rear end of a server chassis.
FIG. 7 is a schematic diagram of a specific structure of a central processing unit node.
FIG. 8 is an exploded view of a structure of FIG. 7.
FIG. 9 is an enlarged view of a partial structure of FIG. 7.
FIG. 10 is a schematic diagram of a specific structure of a data switching node.
FIG. 11 is an exploded view of a structure of FIG. 10.
FIG. 12 is an enlarged view of a partial structure of FIG. 10.
FIG. 13 is an exploded view of a specific structure of a graphics processing unit node.
FIG. 14 is a schematic diagram of a specific structure of a graphics processing unit node.
FIG. 15 is an enlarged view of a partial structure of FIG. 14.
FIG. 16 is a schematic diagram of a specific structure of a third base.
FIG. 17 is a schematic diagram of a tilting state of a third operating handle.
FIG. 18 is a schematic diagram of a contrast between a front viewing angle and a rear viewing angle of a third front window.
FIG. 19 is a schematic diagram of a specific structure of a third top cover.
FIG. 20 is a structural diagram of another viewing angle of FIG. 19.
FIG. 21 is a schematic diagram of a mounting process of a graphics processing unit node.
FIG. 22 is a schematic diagram of a contrast between a front viewing angle and a rear viewing angle of a middle backplane module.

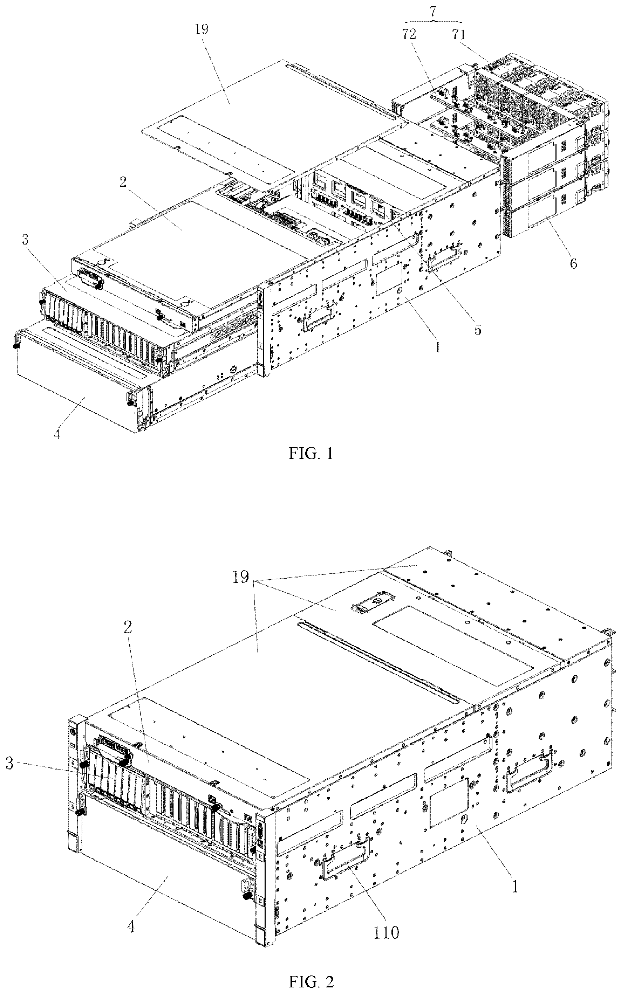

Reference numerals in FIG. 1 to FIG. 22 are as follows:
a-first mounting cavity, b-second mounting cavity;
1-server chassis, 2-central processing unit node, 3-data switching node, 4-graphics processing unit node, 5-middle backplane module, 6-power module, 7-heat dissipation module;
11-first mounting rail assembly, 12-second mounting rail assembly, 13-third mounting rail assembly, 14-mounting tray, 15-power bin, 16-heat dissipation bin, 17-elastic baffle, 18-limiting block, 19-top cover plate, 110-carrying handle;
21-first base, 22-first mainboard, 23-first node connector, 24-first front window, 25-first operating handle, 26-first bottom tray, 27-first top cover;
31-second base, 32-second mainboard, 33-second node connector, 34-function extension module, 35-extension connector, 36-second slide rail, 37-second transitional connecting plate, 38-second operating handle, 39-second limiting post, 310-second top cover, 311-second bottom tray, 312-hard disk module;
41-third base, 42-third mainboard, 43-third node connector, 44-third top cover, 45-low folded edge, 46-third slide rail, 47-third transitional connecting plate, 48-third operating handle, 49-third limiting post, 410-third front window, 411-locking member, 412-elastic member, 413-locking pin, 414-elastic strip, 415-limiting plate, 416-third bottom tray, 417-air director, 418-positioning post, 419-positioning groove, 420-avoidance hole, 421-reinforcing plate, 422-supporting block, 423-reinforcing rib, 424-positioning member, 425-mounting guide plate;
51-first connector, 52-second connector, 53-third connector, 54-power connector, 55-heat dissipation control connector, 56-front backplane, 57-rear backplane, 58-positioning rod, 59-ventilation hole; and
71-heat dissipation fan, 72-fan backplane.

### DETAILED DESCRIPTION

Technical solutions in some embodiments of the present disclosure will be clearly and completely described below in combination with accompanying drawings in the embodiments of the present disclosure. Obviously, the described embodiments are a part of the embodiments of the present disclosure, rather than all of the embodiments. All of the other embodiments that a person skilled in the art obtains on the basis of the embodiments of the present disclosure without paying creative labor fall within the protection scope of the present disclosure.

It should be noted that the descriptions of "first" and "second" in the present disclosure are only used to distinguish technical features. The descriptions of "first" and "second" are only used for descriptive purposes, and cannot be understood as indicating or implying their relative importance, priority, or sequence.

Referring to FIG. 1 and FIG. 2, FIG. 1 is a schematic diagram of a whole structure of some specific embodiments according to the present disclosure, and FIG. 2 is a schematic diagram of a whole structure of some specific embodiments according to the present disclosure.

In some specific embodiments provided by the present disclosure, a multi-node server architecture mainly includes a server chassis 1, a central processing unit (CPU) node 2, a data switching node 3, a graphics processing unit (GPU) node 4 and a middle backplane module 5.

The server chassis 1 is a main component of the server architecture and is mainly configured to mount and carry other server components.

The central processing unit node 2 is mounted in the server chassis 1 and is detachably connected to the server chassis 1, that is, insertion and mounting operation and extraction and dismounting operation may be realized by performing reciprocating linear movement in the server chassis 1, thereby facilitating the dismounting and mounting operation on the server chassis 1. The central processing unit node 2 is mainly configured to realize data switching, global control and other functions.

The graphics processing unit node 4 is mounted in the server chassis 1 and is detachably connected to the server chassis 1, that is, insertion and mounting operation and extraction and dismounting operation may be realized by performing reciprocating linear movement in the server chassis 1, thereby facilitating the dismounting and mounting operation on the server chassis 1. The graphics processing unit node 4 is mainly configured to perform AI graphic data computation.

The data switching node 3 is mounted in the server chassis 1 and is detachably connected to the server chassis 1, that is, insertion and mounting operation and extraction and dismounting operation may be realized by performing reciprocating linear movement in the server chassis 1, thereby facilitating the dismounting and mounting operation on the server chassis 1. The data switching node 3 is mainly configured to implement data interaction and communication between the central processing unit node 2 and the graphics processing unit node 4, that is, the central processing unit node 2 and the graphics processing unit node 3 do not directly communicate with each other, but communicate indirectly through the data switching node 3.

The middle backplane module 5 is also mounted in the server chassis 1, and mainly configured to implement unified data transfer between the central processing unit node 2 and the data switching node 3 and between the graphics processing unit node 4 and the data switching node 3. The middle backplane module 5 is provided with a first connector 51, a plurality of second connectors 52 and a plurality of third connectors 53, and the first connector 51, the second connectors 52 and the third connectors 53 are interconnected by signals. The first connector 51 is mainly configured to insert into and match with the central processing unit node 2, thereby realizing the signal connection between the central processing unit node 2 and the middle backplane module 5; the second connectors 52 are mainly configured to insert into and match with the data switching node 3, thereby realizing the signal connection between the data switching node 3 and the middle backplane module 5; and the third connectors 53 are mainly configured to insert into and match with the graphics processing unit node 4, thereby realizing the signal connection between the graphics processing unit node 4 and the middle backplane module 5.

In this way, according to the multi-node server architecture provided by the present embodiment, since the central processing unit node 2, the data switching node 3 and the graphics processing unit node 4 are all detachably connected to the server chassis 1, and the central processing unit node 2, the data switching node 3 and the graphics processing unit node 4 are respectively inserted into and matched with the first connector 51, the second connectors 52 and the third connectors 53 and are also connected to the middle backplane module 5 by signals, indirect data communication between the central processing unit node 2 and the graphics processing unit node 4 is realized by using the middle backplane module 5 and the data switching node 3, so that there is basically no need to use any data cables for interconnection between the nodes, and thus on one hand, the usage amount of data cables may be reduced as much as possible, thereby overcoming the problem that the data cables occupy the ventilation area and ensuring heat dissipation performance; and on the other hand, the central processing unit node 2, the data switching node 3 and the graphics processing unit node 4 may be conveniently detached from the first connector 51, the second connectors 52 and the third connectors 53 respectively, so that the central processing unit node 2, the data switching node 3 and the graphics processing unit node 4 may be separately extracted from the server chassis 1, and then separate dismounting, mounting and maintenance operations of each node may be performed conveniently and quickly, thereby realizing the flexible configuration of each node.

To sum up, the multi-node server architecture provided by the present embodiment may reduce the usage amount of data cables as much as possible, conveniently and quickly perform separate dismounting, mounting and maintenance operations of each node, realize the flexible configuration of each node, and ensure the heat dissipation performance at the same time.

In order to facilitate insertion and extraction operation of the central processing unit node 2, the data switching node 3 and the graphics processing unit node 4 respectively, the central processing unit node 2, the data switching node 3 and the graphics processing unit node 4 are hierarchically distributed in a vertical direction in the server chassis 1 in the present embodiment, that is, in a horizontal posture and are distributed in a height direction. For example, the central processing unit node 2 is located in an upper layer, the data switching node 3 is located in a middle layer and the graphics processing unit node 4 is located in a bottom layer. Correspondingly, the first connector 51, the second connectors 52, and the third connectors 53 are also hierarchically distributed in the vertical direction on the middle backplane module 5, that is, distributed in a height direction of the middle backplane module 5; and a distribution form of the first connector 51, the second connectors 52 and the third connectors 53 on the middle backplane module 5 corresponds to a distribution form of the central processing unit node 2, the data switching node 3 and the graphics processing unit node 4 in the server chassis 1, so as to ensure correct one-to-one correspondence.

Of course, the central processing unit node 2, the data switching node 3 and the graphics processing unit node 4 are not limited to being hierarchically distributed in the vertical direction in the server chassis 1, but may also be arranged in a vertical posture along a depth direction of the server chassis 1.

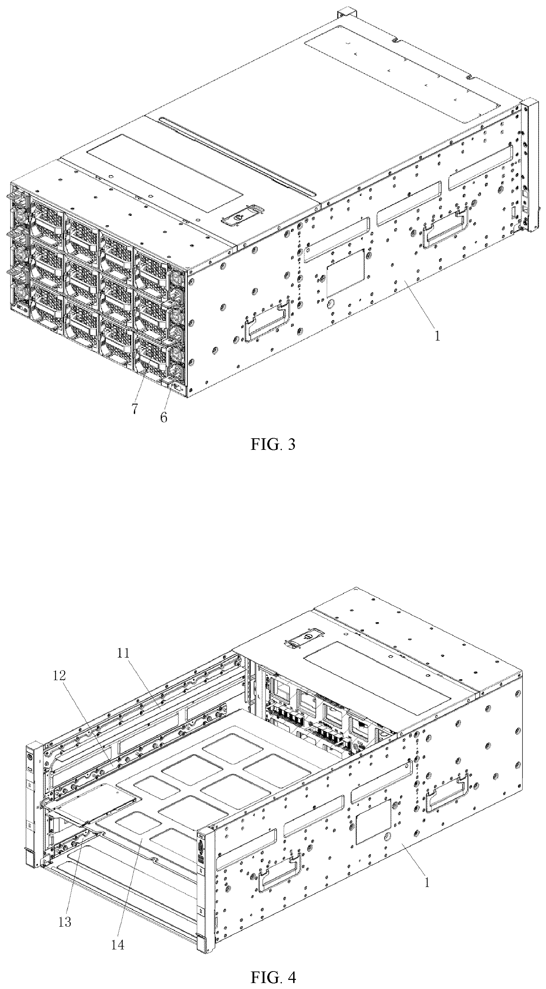

As shown in FIG. 3, FIG. 3 is a schematic diagram of another viewing angle of FIG. 2.

In addition, in order to ensure the power supply and heat dissipation performance, a plurality of power modules 6 and a plurality of heat dissipation modules 7 are additionally provided in the present embodiment. The power modules 6 are mounted in the server chassis 1 and are detachably connected to the server chassis 1, that is, insertion and mounting operation and extraction and dismounting operation may be realized by performing reciprocating linear movement in the server chassis 1, thereby facilitating the dismounting and mounting operation on the server chassis 1. The power modules 6 are mainly configured to supply power to other server components. The heat dissipation modules 7 are mounted in the server chassis 1 and are detachably connected to the server chassis 1, that is, insertion and mounting operation and extraction and dismounting operation may be realized by performing reciprocating linear movement in the server chassis 1, thereby facilitating the dismounting and mounting operation on the server chassis 1. The heat dissipation modules 7 are mainly configured to implement air cooling heat dissipation for other server components. Of course, the heat dissipation modules 7 may also perform heat dissipation for other server components in a liquid cooling manner.

Correspondingly, a plurality of power connectors 54 and a plurality of heat dissipation control connectors 55 are additionally provided on the middle backplane module 5 in the present embodiment. The power connectors 54 are mainly configured to be inserted into and matched with the power modules 6, so as to further realize electrical connection between the power module 6 and the middle backplane module 5. The heat dissipation control connectors 55 are mainly configured to be inserted into and matched with the heat dissipation modules 7, so as to realize signal connection between the heat dissipation module 7 and the middle backplane module 5. This arrangement may not only save power cables, but also further reduce the usage amount of data cables.

In a specific embodiment of the heat dissipation modules 7, each of the plurality of heat dissipation modules 7 mainly includes a heat dissipation fan 71 and a fan backplane 72. The heat dissipation fan 71 is in signal connection with the fan backplane 72, and the fan backplane 72 is inserted into and matched with the heat dissipation control connector 55 on the middle backplane module 5 through the connector. In this way, the central processing unit node 2 may be in signal connection with the heat dissipation fan 71 through the heat dissipation control connector 55 on the middle backplane module 5, thereby conveniently controlling a heat dissipation state of the heat dissipation fan 71.

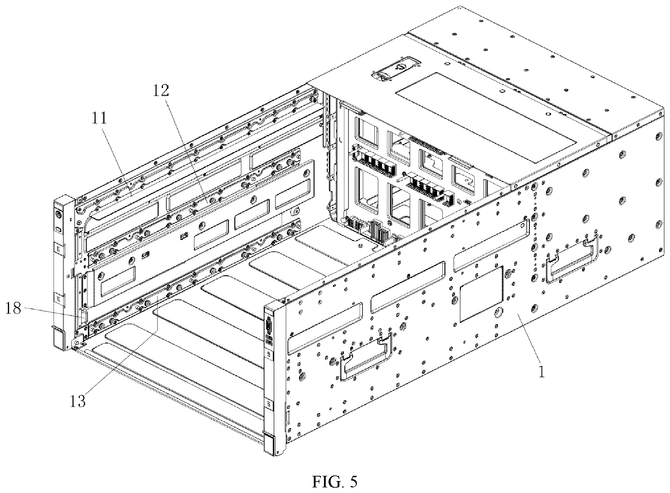

As shown in FIG. 4 and FIG. 5, FIG. 4 is a schematic structural diagram of a front end of a server chassis 1, and FIG. 5 is a schematic structural diagram after removing a mounting tray 14 in FIG. 4.

In some specific embodiments of the server chassis 1, an internal space of the server chassis 1 mainly includes a first mounting cavity a and a second mounting cavity b. The first mounting cavity a and the second mounting cavity b are bounded by the middle backplane module 5. The first mounting cavity a is located at a front side of the middle backplane module 5, that is, a front end space of the server chassis 1, and mainly configured to mount core components such as the central processing unit node 2, the data switching node 3 and the graphics processing unit node 4. The second mounting cavity b is located at a rear side of the middle backplane module 5, that is, a rear end space of the server chassis 1, and mainly configured to mount other auxiliary server components such as the power module 6 and the heat dissipation module 7. In this way, the internal space of the server chassis 1 is divided into two parts by using the middle backplane module 5, so that each of the core components is separated from other auxiliary server components, thereby avoiding the mounting interference and heat dissipation influence.

Generally, the server chassis 1 is specifically 6U in height, while the central processing unit node 2 usually occupies 1U in height, the data switching node 3 usually occupies 2U in height, and the graphics processing unit node 4 usually occupies 3U in height.

Further, the first mounting cavity a of the server chassis 1 specifically includes a first node mounting cavity, a second node mounting cavity and a third node mounting cavity. The first node mounting cavity is mainly configured to mount the central processing unit node 2, the second node mounting cavity is mainly configured to mount the data switching node 3, and the third node mounting cavity is mainly configured to mount the graphics processing unit node 4. Generally, the first node mounting cavity is located in an upper layer area of the first mounting cavity a, the second node mounting cavity is located in a middle layer area of the first mounting cavity a, the third node mounting cavity is located in a lower layer area of the first mounting cavity a, and the first node mounting cavity, the second node mounting cavity and the third node mounting cavity are hierarchically distributed in the vertical direction in the first mounting cavity a and do not affect each other. Of course, the vertical distribution form of the first node mounting cavity, the second node mounting cavity and the third node mounting cavity may also be flexibly adjusted, and the relative relationship between the upper position and the lower position is not fixed. For example, the first node mounting cavity is located in the middle layer area of the first mounting cavity a, the second node mounting cavity is located in the upper layer area of the first mounting cavity a, and the third node mounting cavity is located in the lower layer area of the first mounting cavity a. In addition, the first node mounting cavity, the second node mounting cavity and the third node mounting cavity are not limited to being hierarchically distributed in the vertical direction in the first mounting cavity a. For example, the first node mounting cavity, the second node mounting cavity, and the third node mounting cavity may be distributed in parallel along the depth direction of the server chassis 1, at this time, the central processing unit node 2, the data switching node 3 and the graphics processing unit node 4 are vertically mounted into the first mounting cavity a in a vertical posture.

In addition, the first mounting cavity a of the server chassis 1 is not limited to including the first node mounting cavity, the second node mounting cavity and the third node mounting cavity. When there are more nodes, the first mounting cavity a may further include more node mounting cavities.

In addition, in order to facilitate the mounting of the middle backplane module 5 in the server chassis 1, besides the first mounting cavity a and the second mounting cavity b, the internal space of the server chassis 1 may also include an intermediate mounting cavity (not shown in the drawings). Specifically, the intermediate mounting cavity is located between the first mounting cavity a and the second mounting cavity b to separate the first mounting cavity a and the second mounting cavity b, and is mainly configured to mount the middle backplane module 5. Generally, a size (or a width) of the intermediate mounting cavity is relatively narrow in the depth direction, so as to adapt to a size of the middle backplane module 5. Additionally, sliding grooves extending in the vertical direction are formed on two side walls of the intermediate mounting cavity, so that the middle backplane module 5 may slide into the intermediate mounting cavity in the vertical direction, thereby realizing slidable and detachable mounting of the middle backplane module 5 in the server chassis 1. Of course, it is also possible to reinforce the middle backplane module 5 with fasteners such as screws in the mounting cavity, or it is also possible to achieve positioning by matching components such as positioning pins with positioning holes in the middle backplane module 5 in the mounting cavity. In order to facilitate the insertion and extraction operation and dismounting and mounting operation of the central processing unit node 2, the data switching node 3 and the graphics processing unit node 4 in the server chassis 1, a first mounting rail assembly 11, a second mounting rail assembly 12 and a third mounting rail assembly 13 are additionally provided in the present embodiment. The central processing unit node 2 is specifically disposed on the first mounting rail assembly 11, and forms a sliding connection with the first mounting rail assembly 11, so as to be able to slide along the first mounting rail assembly 11, thereby realizing the mounting and dismounting operation of the central processing unit node 2 in the server chassis 1 along the first mounting rail assembly 11. The data switching node 3 is specifically disposed on the second mounting rail assembly 12, and forms a sliding connection with the second mounting rail assembly 12, so as to be able to slide along the second mounting rail assembly 12, thereby realizing the mounting and dismounting operation of the data switching node 3 in the server chassis 1 along the second mounting rail assembly 12. The graphics processing unit node 4 is specifically arranged on the third mounting rail assembly 13, and forms a sliding connection with the third mounting rail assembly 13, so as to be able to slide along the third mounting rail assembly 13, thereby realizing the mounting and dismounting operation of the graphics processing unit node 4 in the server chassis 1 along the third mounting rail assembly 13. In this way, the central processing unit node 2, the data switching node 3 and the graphics processing unit node 4 respectively correspond to one mounting rail and may slide respectively on their own mounting rail, thereby ensuring the insertion and extraction operation and dismounting and mounting operation of the central processing unit node 2, the data switching node 3 and the graphics processing unit node 4 to be independent from each other and do not affect each other, and realizing the separate dismounting, mounting and maintenance operations and personalized configuration adjustment of the three nodes.

In a specific embodiment of the first mounting rail assembly 11, the second mounting rail assembly 12 and the third mounting rail assembly 13, the first mounting rail assembly 11, the second mounting rail assembly 12 and the third mounting rail assembly 13 are specifically guide rails extending along a depth dimension direction of the server chassis 1 or a plurality of rollers distributed in the depth dimension direction of the server chassis 1. For example, the first mounting rail assembly 11 is specifically the guide rail, and the second mounting rail assembly 12 and the second mounting rail assembly 13 are specifically a plurality of rollers. In this way, when the central processing unit node 2, the data switching node 3 and the graphics processing unit node 4 are mounted on the first mounting rail assembly 11, the second mounting rail assembly 12 and the third mounting rail assembly 13 respectively, it may be ensured that all three nodes maintain a horizontal posture in a insertion and extraction movement process, thereby realizing the stable insertion and extraction operation. Meanwhile, when a plurality of rollers are used, the friction and wear on the central processing unit node 2, the data switching node 3 and the graphics processing unit node 4 may be reduced by rolling friction, thereby enhancing the motion smoothness.

Considering that the data switching node 3 is usually disposed in a middle layer of the first mounting cavity a in the server chassis 1 and has a relatively large weight, if it is only supported by the second mounting rail assembly 12, it may cause deformation of the second mounting rail assembly 12. In view of this, a mounting tray 14 is additionally provided in the present embodiment. Specifically, the mounting tray 14 is disposed in a first safety cavity of the server chassis 1 and specifically connected to two side walls of the server chassis 1. The mounting tray 14 is mainly configured to support and mount the data switching node 3, and assist the second mounting rail assembly 12 to improve the mounting stability of the data switching node 3. Of course, the mounting tray 14 does not interfere with the movement of the data switching node 3 on the second mounting rail assembly 12.

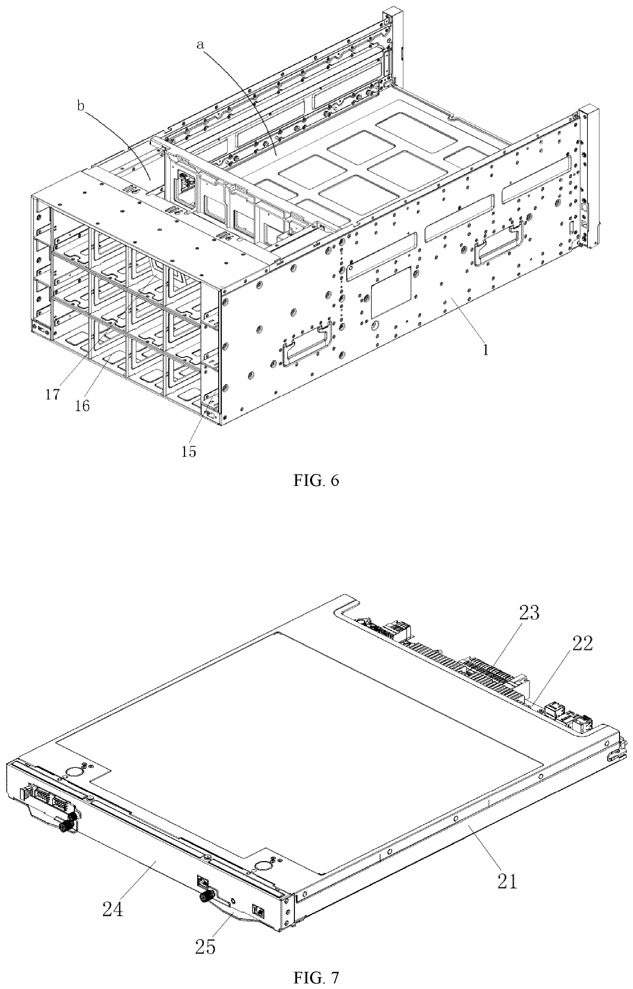

As shown in FIG. 6, FIG. 6 is a schematic structural diagram of a rear end of a server chassis 1.

In order to facilitate the insertion and extraction operation and dismounting and mounting operation of the power module 6 and the heat dissipation module 7 in the server chassis 1, a plurality of power bins 15 and a plurality of heat dissipation bins 16 are additionally provided in the server chassis 1 in the present embodiment.

The plurality of power bins 15 are disposed in the second mounting cavity b of the server chassis 1, specifically located on the side wall of the server chassis 1, and are distributed in the vertical direction close to the side wall of the server chassis 1. Generally, there are a plurality of power bins at the same time, for example, 3 to 6. Correspondingly, the power modules 6 needs to be mounted into the power bins 15 in a vertical posture to form a sliding connection with a bottom plate of the power bin 15, so that the power modules 6 may slide into or out of the power bins 15 along the bottom plate of the power bins 15. In this way, each of the plurality of power modules 6 reasonably utilizes a side space of the server chassis 1, thereby reducing the occupation of a middle mounting space of the server chassis 1, and increasing the space utilization rate.

The plurality of heat dissipation bins 16 are also disposed in the second mounting cavity b of the server chassis 1, and specifically located in a middle area of the server chassis 1. Generally, there are a plurality of heat dissipation bins at the same time, and plurality of heat dissipation bins are distributed in a vertical direction and a width direction to form a matrix according to certain specifications, for example, 3×4 distribution. Correspondingly, the heat dissipation modules 7 may be mounted in the heat dissipation bins 16, and forms a sliding connection with a bottom plate of the heat dissipation bins 16, so that the heat dissipation modules 7 may slide into or out of the heat dissipation bins 16 along the bottom plate of the heat dissipation bins 16. In addition, a plurality of fan backplanes 72 may also be mounted in the second mounting cavity b of the server chassis 1, and specifically located at the rear side of the heat dissipation bins 16, so that the fan backplanes 72 may be conveniently connected to a plurality of heat dissipation fans 71 mounted in the heat dissipation bins 16. Generally, one of the plurality of fan backplanes 72 is simultaneously connected to each of the plurality of heat dissipation fans 71 in the heat dissipation bins 16 in a same layer. For example, one fan backplane 72 is connected to three heat dissipation fans 71. In this way, the quantity of the heat dissipation modules 7 is controlled by performing insertion and extraction operation on the heat dissipation modules 7 in the heat dissipation bin 16, and thus the upper limit of the heat dissipation performance of the server may be conveniently adjusted.

Further, it is considered that after the configuration of each node is adjusted, the heat dissipation modules 7 in the heat dissipation bin 16 may also be mismatched. In view of this, an elastic baffle 17 is additionally arranged in each heat dissipation bin 16 in the present embodiment. Specifically, one end of the elastic baffle 17 is connected to an inner wall of the heat dissipation bin 16, for example, a top wall of the heat dissipation bin 16, and the other end extends toward an opposite inner wall, for example, a bottom wall of the heat dissipation bin 16. The elastic baffle is elastic. When the heat dissipation module 7 is inserted into the heat dissipation bin 16, the heat dissipation module 7 abuts against the elastic baffle 17 and makes the elastic baffle 17 to be deformed elastically to close to the inner wall of the heat dissipation bin 16, so that the elastic baffle 17 cannot block a ventilation area of the heat dissipation bin 16. When the heat dissipation module 7 is extracted from the heat dissipation bin 16, the elastic baffle 17 elastically rebounds under an elastic force and closes the heat dissipation bin 16, which is equivalent to closing the corresponding heat dissipation bin 16 and reducing the ventilation area to zero. In this way, when the heat dissipation module 7 is extracted from a certain heat dissipation bin 16, a cold air flow that originally entered the heat dissipation bin 16 will be blocked by the elastic baffle 17, so as to flow into other heat dissipation bins 16 nearby, thereby enhancing the cold air flow of the other heat dissipation bins 16 and avoiding the waste of cooling capacity.

In addition, the top of the server chassis 1 is provided with a top cover plate 19 in the present embodiment. Specifically, the top cover plate 19 mainly includes a front upper cover, a middle upper cover and a rear upper cover. The front upper cover is located in an area of each node, the middle upper cover is located in an area of the middle backplane module 5, and the rear upper cover is located in an area of the power module 6. Meanwhile, the front upper cover and the rear upper cover are fixed on the side walls of the server chassis 1 through fasteners such as rivets, and the middle upper cover is positioned on the side walls of the server chassis 1 through I-shaped pins, and then fixed on the side walls of the server chassis 1 through an upper cover lock.

In addition, in order to facilitate a staff to carry the whole server, carrying handles 110 are further disposed on the side walls of the server chassis 1 in the present embodiment. Specifically, the carrying handles 110 may be turned over and accommodated on the side walls of the server chassis 1. When it is needed to be used, it is only necessary to turn the carrying handles 110 outward, so that the carrying handles 110 may be grasped and used.

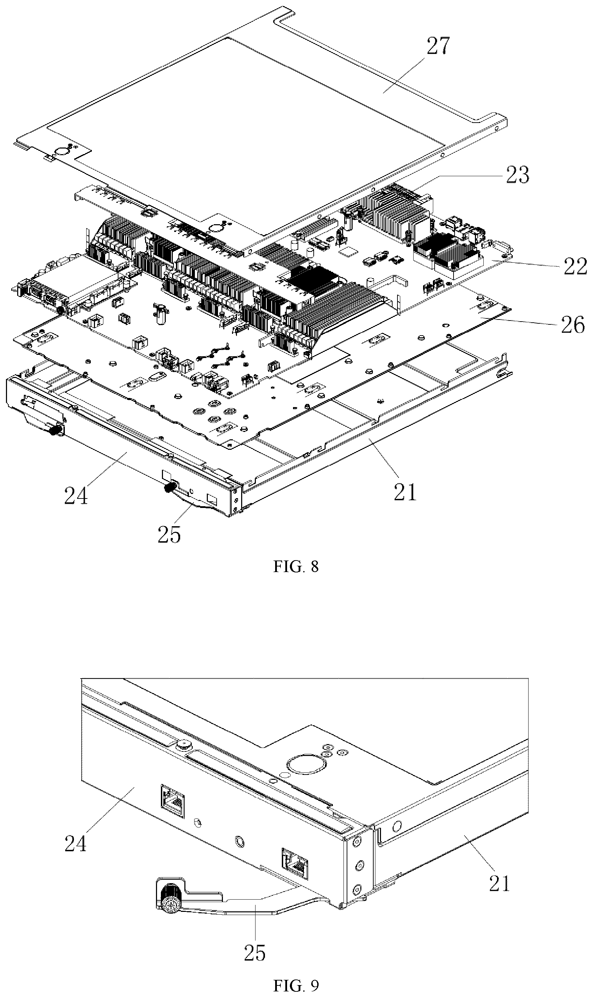

As shown in FIG. 7 and FIG. 8, FIG. 7 is a schematic diagram of a specific structure of a central processing unit node 2, and FIG. 8 is an exploded view of a structure of FIG. 7.

In some specific embodiments of the central processing unit node 2, the central processing unit node 2 mainly includes a first base 21 and a first mainboard 22. The first base 21 is a bottom layer component of the central processing unit node 2 and is mainly configured to carry other components. Server components such as a central processing unit, a memory bank and a network card are mounted on the first mainboard 22. In addition, in order to facilitate the signal connection between the first mainboard 22 and the middle backplane module 5, a first node connector 23 is disposed at a rear end of the first mainboard 22. The first node connector 23 is mainly configured to be connected to the first connector 51 on the middle backplane module 5, so as to realize the signal connection between the first mainboard 22 and the middle backplane module 5. In this way, when disassembling the central processing unit node 2, it is only necessary to extract the first node connector 23 from the first connector 51, so that the central processing unit node 2 may be disconnected from the middle backplane module 5.

As shown in FIG. 9, FIG. 9 is an enlarged view of a partial structure of FIG. 7.

Further, in order to facilitate the staff to perform the insertion and extraction operation and dismounting and mounting operation on the central processing unit node 2, the central processing unit node 2 further includes a first front window 24 and one or more first operating handles 25 in the present embodiment. The first front window 24 is disposed at a front end of the first base 21, and the one or more first operating handle 25 are disposed at a side of the first front window 24, for example, the one or more first operating handles 25 are simultaneously disposed at both sides of the first front window 24, or one of the one or more first operating handles 25 is disposed only at one side of the first front window 24. Specifically, the first operating handle 25 is rotatably connected to the side of the first front window 24, so that the first operating handle 25 may horizontally rotate relative to the first front window 24. In a normal state, the first operating handle 25 is rotated to tightly adhere to an outer side of the first front window 24, so as to be accommodated, and is fixed by fasteners such as hand screwing bolts. In an insertion and extraction operation state, the first operating handle 25 is rotated to be away from the outer side of the first front window 24 and face the front end of the first base 21, which is convenient for the staff to grasp and apply force by hand, so as to insert the entire central processing unit node 2 into the server chassis 1, or extract the entire central processing unit node 2 from the server chassis 1.

In addition, a first bottom tray 26 is additionally arranged in the first base 21 and configured to support and mount the first mainboard 22. The first front window 24 may be further provided with a plurality of heat dissipation holes to enhance the ventilation and heat dissipation. The top of the first base 21 is further provided with a first top cover 27, and the first top cover 27 is positioned by engaging I-shaped pins into a top groove formed on the side wall of the first base 21, and subsequently is fixed to the first base 21 through a pressable upper cover lock. The rear end of the first mainboard 22 is further provided with connector positioning holes, which are configured to be positioned and matched with positioning posts 418 disposed on the middle backplane module 5. The rear end of the first base 21 is further provided with positioning notches, which are configured to be positioned and matched with components such as I-shaped pins disposed inside the server chassis 1, thereby realizing the mounting and positioning of the entire central processing unit node 2 in the server chassis 1.

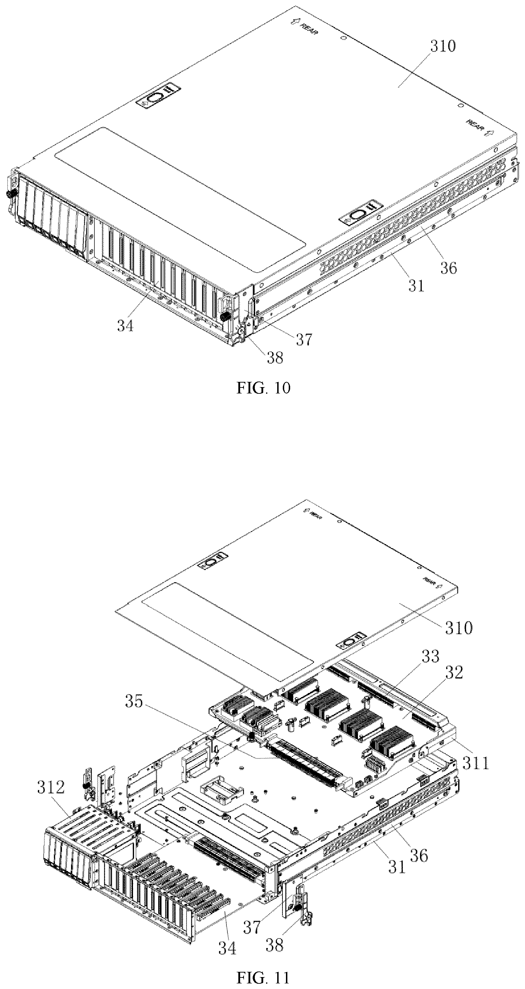

As shown in FIG. 10 and FIG. 11, FIG. 10 is a schematic diagram of a specific structure of a data switching node 3, and FIG. 11 is an exploded view of a structure of FIG. 10.

In some specific embodiments of the data switching node 3, the data switching node 3 mainly includes a second base 31 and a second mainboard 32. The second base 31 is a bottom layer component of the data switching node 3 and is mainly configured to carry other components. A server component such as a data processing module is mounted on the second mainboard 32. In addition, in order to facilitate the signal connection between the second mainboard 32 and the middle backplane module 5, a second node connector 33 is disposed at the rear end of the second mainboard 32. The second node connector 33 is mainly configured to be connected to the second connector 52 on the middle backplane module 5, so as to the signal connection between the second mainboard 32 and the middle backplane module 5. In this way, when disassembling the data switching node 3, it is only necessary to extract the second node connector 33 from the second connector 52, so that the data switching node 3 may be disconnected from the middle backplane module 5.

In order to improve the extension performance of the server, a function extension module 34 is additionally provided in the data switching node 3 in the present embodiment. The function extension module 34 is disposed in the second base 31, for example, the front end of the second base 31. Specifically, the function extension module 34 may be a peripheral component interconnect express (PCIE) module or other types of extension modules, for example, a PCIE card capable of mounting and carrying a GPU chip or a PCIE card capable of carrying a network chip. Generally, the function extension module 34 is specifically disposed at the front end of the second base 31, and the second mainboard 32 is specifically disposed at the rear end of the second base 31. Meanwhile, in order to facilitate the signal connection between the function extension module 34 and the second mainboard 32, an extension connector 35 is further disposed at the front end of the second mainboard 32 in the present embodiment. Specifically, the extension connector 35 is mainly configured to be inserted into and matched with the connector on the function extension module 34, so as to realize the signal connection between the function extension module 34 and the second mainboard 32, and facilitate the dismounting and mounting operation between the function extension module 34 and the second mainboard 32, thereby realizing the flexible configuration.

In order to facilitate the slidable insertion and extraction movement of the data switching node 3 along the second mounting rail assembly 12, one or more second slide rails 36 are additionally provided in the present embodiment. Specifically, each of the one or more the second slide rail 36 is disposed on the outer side wall of the second base 31, which may be disposed only on a single side or simultaneously on both sides. Specifically, the second slide rail 36 extends for a preset length along a depth dimension direction (usually a length direction) of the second base 31, and is primarily configured to cooperate with the second mounting rail assembly 12 disposed on the side wall of the server chassis 1. In this way, through the cooperation between the second slide rail 36 and the second mounting rail assembly 12, when performing insertion and extraction operation on the data switching node 3, the second slide rail 36 may slide along the second mounting rail assembly 12, so as to guide the insertion and extraction movement of the data switching node 3. For example, when the second mounting rail assembly 12 specifically uses a plurality of rollers, the second slide rail 36 may form rolling friction with each of the plurality of rollers at the same time.

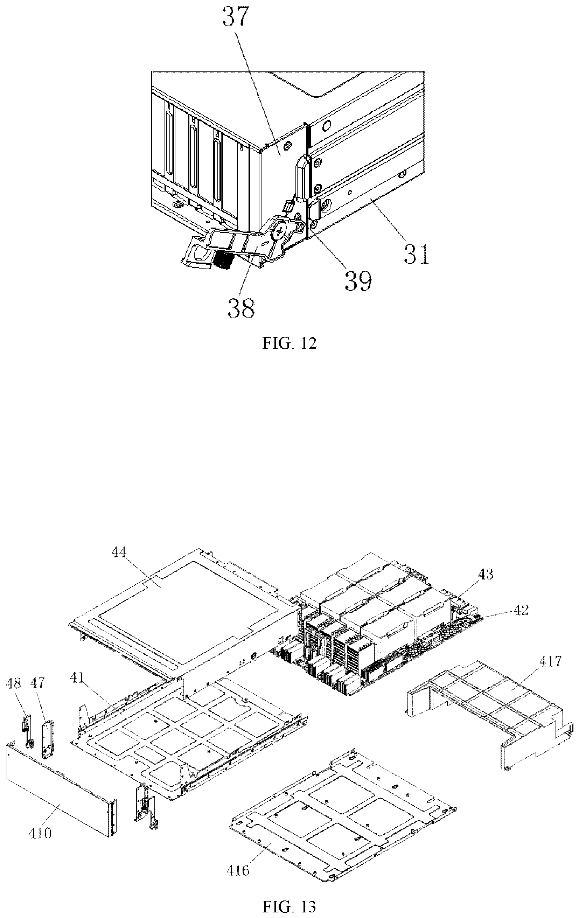

As shown in FIG. 12, FIG. 12 is an enlarged view of a partial structure of FIG. 10.

In order to facilitate the staff to perform the insertion and extraction operation and dismounting and mounting operation on the data switching node 3, one or more second transitional connecting plates 37 and one or more second operating handles 38 are additionally provided in the present embodiment. The one or more second transitional connecting plates 37 are disposed at the front end of the side wall of the second base 31. For example, the one or more second transitional connecting plates 37 are simultaneously disposed at two sides of the second base 31, or one of the one or more second transitional connecting plates 37 is only disposed at one side of the second base 31. The one or more second operating handles 38 are disposed on the one or more second transitional connecting plates 37, and are rotatably connected to the one or more second transitional connecting plates 37, so as to turn over relative to the one or more second transitional connecting plates 37. In a normal state, the second operating handle 38 is turned to a vertical posture and accommodated on the outer side surface of the second transitional connecting plate 37, and may also be fixed by fasteners such as hand screwing bolts. In an insertion and extraction operation state, the second operating handle 38 is turned outward to be away from the second transitional connecting plate 37 and assumes a preset inclination posture, and the second operating handle 38 faces the front of the second base 31 as a whole, which is convenient for the staff to grasp and apply force by hand, so as to insert the entire data switching node 3 into the server chassis 1, or extract the entire data switching node 3 from the server chassis 1.

Further, considering that a turning angle of the second operating handle 38 should not be too large, one or more second limiting posts 39 are additionally provided in the present embodiment. Specifically, each of the one or more second limiting posts 39 is disposed on the second transitional connecting plate 37, specifically in a rear area of the second operating handle 38, and mainly configured to abut against the rear end of the second operating handle 38 when the second operating handle 38 is turned outward to a preset angle, so that the second operating handle 38 cannot be turned outward, thereby limiting a maximum eversion angle of the second operating handle 38. Generally, the maximum eversion angle of the second operating handle 38 may be in a range of 30° to 60°.

In addition, in the present embodiment, heat dissipation holes are further formed on the side walls of the second base 31, and an air director is further disposed in the second base 31, so as to enhance the ventilation and heat dissipation performance. Meanwhile, the rear end of the second base 31 is provided with a reinforcing crossbeam to improve the structural strength. The top of the second base 31 is further provided with a second top cover 310, and the second top cover 310 is positioned by engaging I-shaped pins into a corresponding groove on the top of the side wall of the second base 31, and subsequently the second top cover 310 is fixed to the second base 31 through an upper cover lock. A second bottom tray 311 is also disposed in the second base 31 to support and mount the second mainboard 32. A hard disk module 312 may be further disposed at the front end of the second base 31. The hard disk module 312 is generally configured to accommodate 4 to 8 2.5-inch hard disks that are plugged vertically. The hard disks are inserted into a hard disk backplane, and subsequently connected to the second mainboard 32 through data cables.

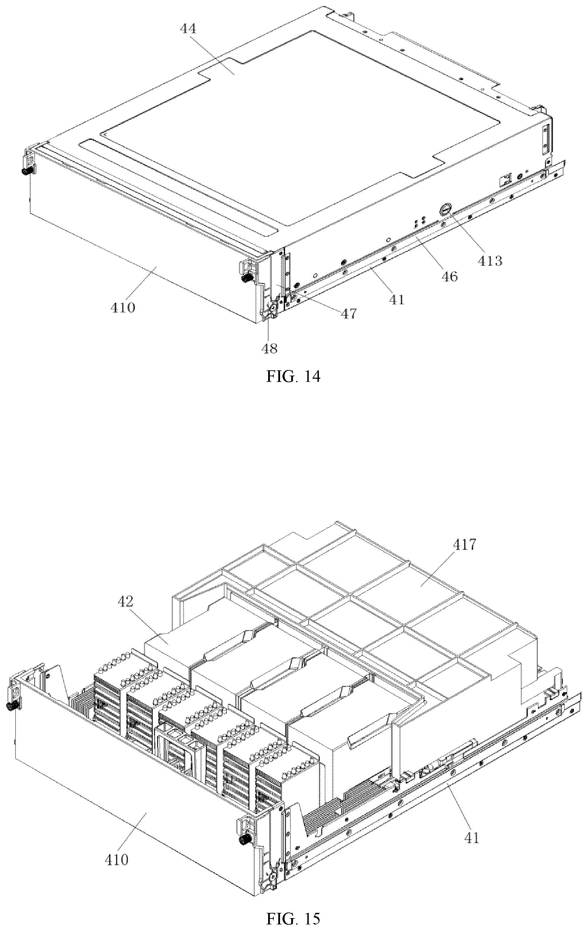

As shown in FIG. 13, FIG. 14 and FIG. 15, FIG. 13 is an exploded view of a specific structure of a graphics processing unit node 4, FIG. 14 is a schematic diagram of a specific structure of a graphics processing unit node 4, and FIG. 15 is an enlarged view of a partial structure of FIG. 14.

In some specific embodiments of the graphics processing unit node 4, the graphics processing unit node 4 mainly includes a third base 41 and a third mainboard 42. The third base 41 is a bottom layer component of the graphics processing unit node 4 and is primarily configured to carry other components. A server component such as a GPU chip is mounted on the third mainboard 42. In addition, in order to facilitate the signal connection between the third mainboard 42 and the middle backplane module 5, a third node connector 43 is disposed at the rear end of the third mainboard 42. The third node connector 43 is mainly configured to be connected to the third connector 53 on the middle backplane module 5, so as to realize the signal connection between the third mainboard 42 and the middle backplane module 5. In this way, when disassembling the graphics processing unit node 4, it is only necessary to extract the third node connector 43 from the third connector 53, so that the graphics processing unit node 4 may be disconnected from the middle backplane module 5.

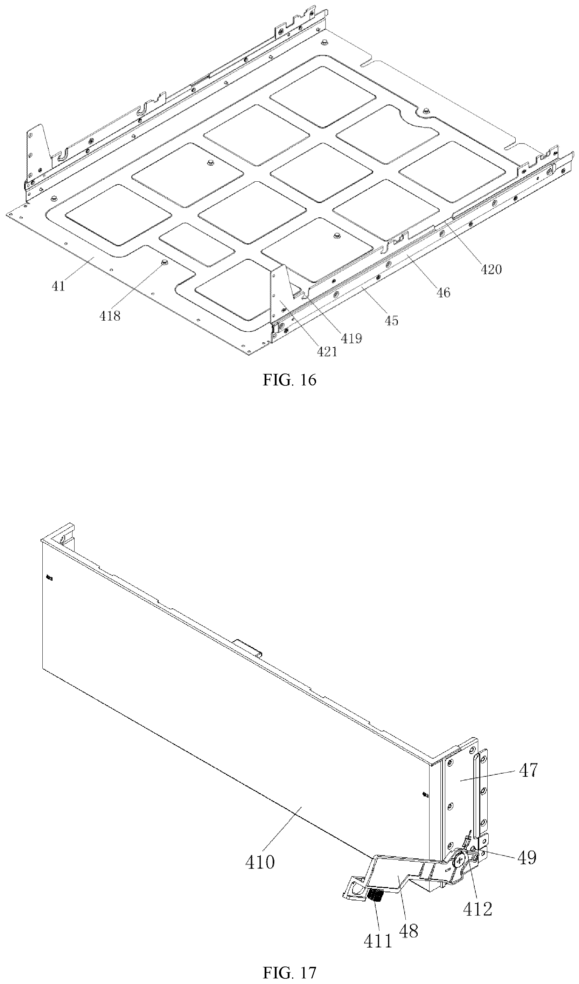

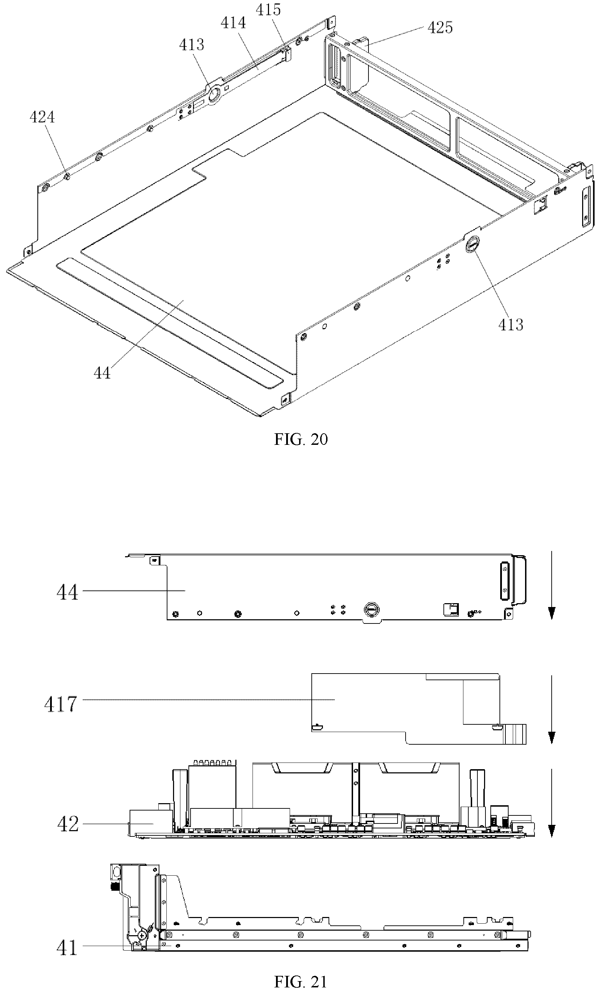

As shown in FIG. 16 and FIG. 21, FIG. 16 is a schematic diagram of a specific structure of a third base 41, and FIG. 21 is a schematic diagram of a mounting process of a graphics processing unit node 4.

Considering that in the related art, a size of a GPU mainboard on which the GPU chip is installed is a relatively large, it is necessary to use a special fixture to complete a multi-step translation process in an assembly process of the GPU mainboard. The mounting process of the GPU mainboard is rather troublesome, which limits the production efficiency of the graphics processing unit node 4. In addition, the more processes in the assembly process, the higher the probability of collision between the GPU mainboard and the chassis due to operation problems by the staff. In view of this, in order to solve the problem that the assembly production efficiency of production lines is affected by many assembly processes in the assembly process of the GPU mainboard, a third top cover 44 and low folded edges 45 are additionally provided in the graphics processing unit node 4 in the present embodiment. The third top cover 44 is similar to the above first top cover 2719 and second top cover 310, and is a cover structure of the third base 41. However, unlike the first top cover 27 and second top cover 310, a height of side plates on both sides of the third top cover 44 is relatively high, which is obviously higher than a height of the low folded edges 45, and thus the third top cover 44 may be inverted on the third base 41. The low folded edges 45 are vertically disposed at on both sides of the third base 41, the height of the low folded edges 45 is relatively low, and the low folded edges 45 are equivalent to two folded edges of the third base 41, so that the third base 41 is closer to a flat plate or a tray. Meanwhile, the side plates on both sides of the third top cover 44 are detachably connected to the low folded edges 45 on both sides. In this way, after the third top cover 44 is connected to the low folded edges 45, the entire graphics processing unit node 4 forms an inverted structure. The third mainboard 42 carrying the GPU chip may be directly mounted in the third base 41 vertically from top to bottom and fixed by fasteners such as screws during the assembly process, without other horizontal sliding movements or additional mounting operations; finally, the third top cover 44 is inverted on the low folded edges 45 to complete the assembly. The height of the side wall of the third base 41 is a relatively low, which may reduce the mounting stroke and simplify the mounting steps of the third mainboard 42, thereby improving the assembly production efficiency of production lines. Meanwhile, the third mainboard 42 is easy to disassemble, thereby having better maintainability, and further reducing the probability of bumping risk in the assembly process of the third mainboard.

Further, in order to facilitate the detachable connection between the third top cover 44 with the low folded edges 45, positioning grooves 419 are formed on the top of each of the low folded edges 45 in the present embodiment. Meanwhile, the bottom of the third top cover 44 is provided with components such as I-shaped pins to cooperate with the positioning grooves 419 to realize the mounting and positioning. Meanwhile, a plurality of threaded holes are further formed on the side wall of each low folded edge 45 to form threaded connection with the side plates on both sides of the third top cover 44.

In order to facilitate the slidable insertion and extraction movement of the graphics processing unit node 4 along the third mounting rail assembly 13, one or more third slide rails 46 are additionally provided in the present embodiment. Specifically, each of the one or more the third slide rail 46 is disposed on the outer side wall of the third base 41, which may be disposed only on a single side or simultaneously on both sides. Specifically, the third slide rail 46 extends for a preset length along a depth dimension direction (usually a length direction) of the third base 41, and is primarily configured to cooperate with the third mounting rail assembly 13 disposed on the side wall of the server chassis 1. In this way, through the cooperation between the third slide rail 46 and the third mounting rail assembly 13, when performing insertion and extraction operation on the graphics processing unit node 4, the third slide rail 46 may slide along the third mounting rail assembly 13, so as to guide the insertion and extraction movement of the graphics processing unit node 4. For example, when the third mounting rail assembly 13 specifically uses a plurality of rollers, the third slide rail 46 may form rolling friction with each of the plurality of rollers at the same time.

As shown in FIG. 17, FIG. 17 is a schematic diagram of a tilting state of a third operating handle 48.

In order to facilitate the staff to perform the insertion and extraction operation and dismounting and mounting operation on the graphics processing unit node 4, one or more third transitional connecting plates 47 and one or more third operating handles 48 are additionally provided in the present embodiment. The one or more third transitional connecting plates 47 are disposed at the front end of the side wall of the third base 41. For example, the one or more second transitional connecting plates 47 are simultaneously disposed at two sides of the third base 41, or one of the one or more second transitional connecting plates 47 is only disposed at one side of the third base 41. The third transitional connecting plate 47 is also configured to mount a third front window 410 to the front end of the third base 41. The one or more third operating handles 48 is disposed on the one or more third transitional connecting plates 47, and are rotatably connected to the one or more third transitional connecting plates 47, so as to turn over relative to the one or more third transitional connecting plates 47. In a normal state, the third operating handle 48 is turned to a vertical posture and accommodated on the outer side surface of the third transitional connecting plate 47, and may also be fixed by fasteners 411 such as a hand-tightened bolt. In an insertion and extraction operation state, the third operating handle 48 is turned outward to be away from the third transitional connecting plate 47 and assumes a preset inclination posture, and the third operating handle 48 faces the front of the third base 41 as a whole, which is convenient for the staff to grasp and apply force by hand, so as to insert the entire graphics processing unit node 4 into the server chassis 1, or extract the entire graphics processing unit node 4 from the server chassis 1.

Further, considering that a turning angle of the third operating handle 48 should not be too large, one or more third limiting posts 49 are additionally provided in the present embodiment. Specifically, each of the one or more third limiting posts 49 is disposed on the third transitional connecting plate 47, specifically located in a rear area of the third operating handle 48, and mainly configured to abut against the rear end of the third operating handle 48 when the third operating handle 48 is turned outward to a preset angle, so that the third operating handle 48 cannot be turned outward, thereby limiting a maximum eversion angle of the third operating handle 48. Generally, the maximum eversion angle of the third operating handle 48 may be in a range of 30° to 60°.

In addition, an elastic member 412 is additionally provided in the present embodiment. Specifically, one end of the elastic member 412 is connected to a rotating shaft of the third operating handle 48, the other end is connected to the outer side wall of the third transitional connecting plate 47. When the third operating handle 48 is turned inward to a retracted state, the elastic member 412 is compressed to accumulate elastic potential energy. At the same time, since the third operating handle 48 is locked by a locking member 411 at the retracted state, the elastic member 412 may be kept in a compressed state. When the locking member 411 is unlocked by a staff, the elastic member 412 rebounds immediately to release the elastic potential energy and drive the third operating handle 48 to turn outward, that is, the third operating handle 48 is driven by an elastic force to automatically pre-turn for a preset angle, so that the staff may conveniently grasp the third operating handle 48, without requiring the third operating handle 48 to turn outward from the retracted state, thereby saving manpower, and also increasing the operation efficiency.

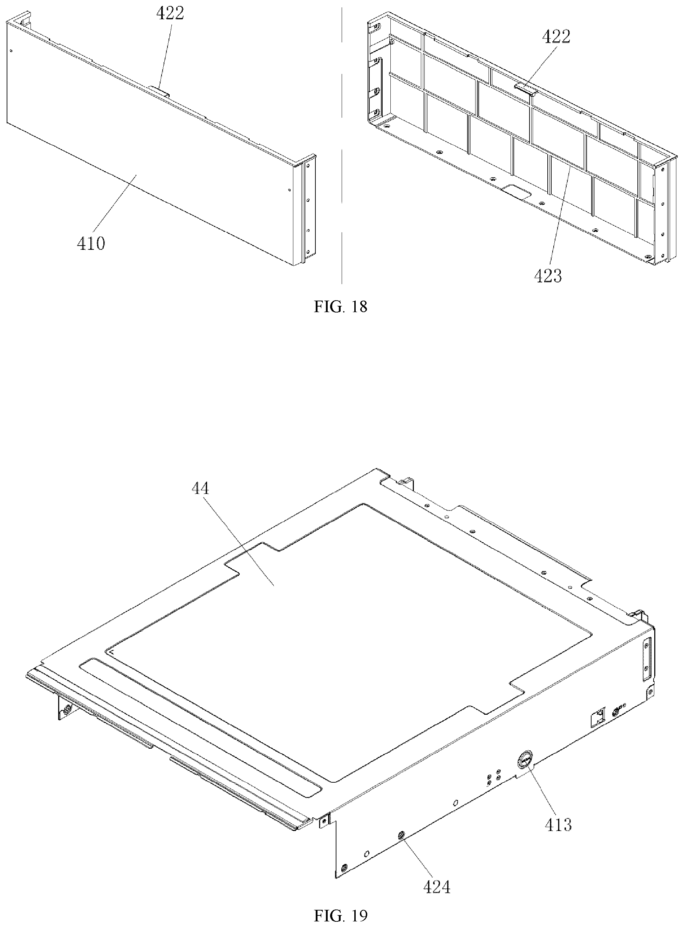

As shown in FIG. 19 and FIG. 20, FIG. 19 is a schematic diagram of a specific structure of a third top cover 44, and FIG. 20 is a structural diagram of another viewing angle of FIG. 19.

In addition, considering that the graphics processing unit node 4 has a relatively large weight, in the process of extracting and disassembling the graphics processing unit node 4 outward, if the staff does not pay attention to the strength control, the graphics processing unit node 4 may fall directly from the third base 41 under the inertia, resulting in damage. In view of this, locking pins 413 and limiting blocks 18 are additionally provided in the present embodiment. Specifically, the locking pins 413 are disposed on the outer side walls of side plates of the third top cover 44, and may be disposed simultaneously on both side plates of the third top cover 44 or disposed only on one side plate of the third top cover 44. Meanwhile, the locking pins 413 protrude from the outer wall of the side plate of the third top cover 44 and may be pressed by the staff. Correspondingly, each of the limiting block 18 is specifically disposed on the inner side wall of the server chassis 1, protrudes from the inner side wall of the server chassis 1, and is mainly configured to abut against the locking pins 413. In this way, when the staff attempts to pull the graphics processing unit node 4 out of the server chassis 1, the graphics processing unit node 4 cannot be directly pulled out of the third base 41, but will be forced to stop halfway due to the abutment of the limiting block 18 against the locking pins 413. Only after the staff presses the locking pins 413 for unlocking, the graphics processing unit node 4 may continue to be pulled outward, thereby effectively preventing the graphics processing unit node 4 from accidentally falling.

Further, in order to prevent the staff from pressing the locking pins 413 too deeply and causing failure, elastic strips 414 and limiting plates 415 are additionally provided in the present embodiment. Each of the elastic strips 414 is disposed at the inner end of the locking pin 413, one end of the locking pin 413 is connected to the inner wall of the side plate of the third top cover 44, and the other end of the locking pin 413 extends along a length direction of the side plate of the third top cover 44. When the locking pin 413 is pressed, the elastic strip 414 is elastically deformed and deflects inward. Each of the limiting plate 415 is disposed on the inner wall of the side plate of the third top cover 44, specifically located at the other end of the elastic strip 414, and is mainly configured to abut against the other end of the elastic strip 414 to limit maximum deflection of the elastic strip 414, thereby preventing the locking pin 413 from being pressed too deeply by the staff.

In addition, a third bottom tray 416 is disposed in the third base 41 in the present embodiment to support and mount the third mainboard 42. Meanwhile, a plurality of hourglass-shaped holes are formed on the third bottom tray 416, and a plurality of positioning posts 418 are disposed on the bottom surface of the third base 41. Through the cooperation between the hourglass-shaped holes with the positioning posts 418, the third bottom tray 416 is positioned and mounted on the third base 41. Each low folded edge 45 is provided with the positioning grooves 419, and the bottom of the third top cover 44 is provided with positioning members 424 such as I-shaped pins at the same time, so as to position and mount the third top cover 44 on the third base 41 through the cooperation between the positioning grooves 419 with the positioning members 424. In order to improve the heat dissipation performance, one or more air directors 417 are additionally arranged in the third base 41. Meanwhile, the top of each low folded edge 45 is further provided with one or more overlapping mounting slots for mounting the one or more air directors 417 and an avoidance hole 420 for avoiding the elastic strip 414 and the limiting plate 415. An L-shaped reinforcing plate 421 is formed by increasing the height of a local area of each low folded edge 45 at a position where the front end of the third base 41 is connected to the third transitional connecting plate 47 to improve the connection strength. The rear end of the third base 41 is provided with a positioning notch to realize the positioning and mounting in the server chassis 1, and the rear end of the third base 41 is further provided with mounting guide plates 425 which are inclined and are mainly configured to mount the graphics processing unit node 4. The mounting guide plates 425 abut against the server chassis 1 to guide the mounting movement of the third base 41, so that the third base 41 may be mounted into the server chassis 1 more smoothly.

As shown in FIG. 18, FIG. 18 is a schematic diagram of a contrast between a front viewing angle and a rear viewing angle of a third front window 410.

In addition, in the embodiment, the third front window 410 is provided with a plurality of heat dissipation holes to enhance the ventilation and heat dissipation performance. Meanwhile, a supporting block 422 is further disposed at the top of the third front window 410 to support the top end of the third top cover 44 and prevent the front end of the third top cover 44 from sinking. In order to improve the structural strength of the third front window 410, a plurality of reinforcing ribs 423 are further disposed on the inner side wall of the third front window 410 in the present embodiment.

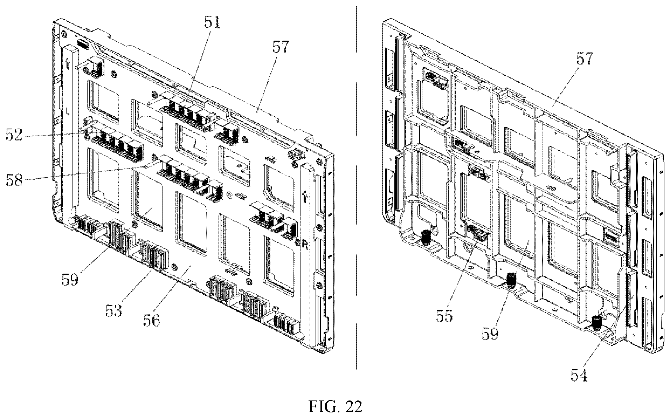

As shown in FIG. 22, FIG. 22 is a schematic diagram of a contrast between a front viewing angle and a rear viewing angle of a middle backplane module 5.

In some specific embodiments of the middle backplane module 5, the middle backplane module 5 mainly includes a front backplane 56 and a rear backplane 57. The front backplane 56 and the rear backplane 57 are connected into a whole, the front backplane 56 faces the front of the server chassis 1, and the rear backplane 57 faces the back of the server chassis 1. Meanwhile, the first connector 51, the second connectors 52 and the third connectors 53 are all disposed on the front backplane 56, and the power connectors 54 and the heat dissipation control connectors 55 are all disposed on the rear backplane 57. In this way, the first connector 51, the second connectors 52 and the third connectors 53, as well as the power connectors 54 and the heat dissipation control connectors 55 are isolated from each other by the front backplane 56 and the rear backplane 57 respectively, thereby preventing the phenomenon of heat concentration and connection confusion.

In addition, a plurality of ventilation holes 59 may be formed on both the front backplane 56 and the rear backplane 57 to enhance the ventilation and heat dissipation performance. In addition, considering that the first node connector 23, the second node connectors 33 and the third node connectors 43 need to be connected to the first connector 51, the second connectors 52 and the third connectors 53 on the front backplane 56 respectively, and the power modules 6 and the heat dissipation modules 7 need to be connected to the power connectors 54 and the heat dissipation control connectors 55 on the rear backplane 57 respectively, in order to ensure the connection accuracy, a plurality of positioning posts 58 are further arranged on both the front backplane 56 and the rear backplane 57 in the present embodiment, so as to form a positioning cooperation with connectors of each node or components such as positioning counterholes on the power modules 6 and the heat dissipation modules 7 through the positioning posts 58.

The above description of the disclosed embodiments enables a person skilled in the art to implement or use the present disclosure. Various modifications to these embodiments are apparent for a person skilled in the art, and the general principles defined herein may be implemented in other embodiments without departing from the spirit or scope of the present disclosure. Therefore, the present disclosure may not be limited to these embodiments described herein, but should be accorded the widest scope consistent with the principles and novel features disclosed herein.

## Claims

1. A multi-node server architecture, comprising: a server chassis (1), a central processing unit node (2) detachably mounted in the server chassis (1), a data switching node (3) detachably mounted in the server chassis (1), a graphics processing unit node (4) detachably mounted in the server chassis (1) and a middle backplane module (5) mounted in the server chassis (1), wherein the middle backplane module (5) is provided with a first connector (51), a plurality of second connectors (52) and a plurality of third connectors (53) which are interconnected by signals, the central processing unit node (2) is inserted into and matched with the first connector (51), the data switching node (3) is inserted into and matched with the plurality of second connectors (52), and the graphics processing unit node (4) is inserted into and matched with the plurality of third connectors (53).

2. The multi-node server architecture according to claim 1, wherein the central processing unit node (2), the data switching node (3) and the graphics processing unit node (4) are hierarchically distributed in a vertical direction in the server chassis (1); and the first connector (51), the plurality of second connectors (52) and the plurality of third connectors (53) are hierarchically distributed in the vertical direction on the middle backplane module (5).

3. The multi-node server architecture according to claim 1, further comprising: a plurality of power modules (6) and a plurality of heat dissipation modules (7) which are detachably mounted in the server chassis (1), wherein the middle backplane module (5) is further provided with a plurality of power connectors (54) and a plurality of heat dissipation control connectors (55), the plurality of power modules (6) are inserted into and matched with the plurality of power connectors (54), and the plurality of heat dissipation modules (7) are inserted into and matched with the plurality of heat dissipation control connectors (55).

4. The multi-node server architecture according to claim 3, wherein each of the plurality of heat dissipation modules (7) comprises a heat dissipation fan (71) and a fan backplane (72), wherein the heat dissipation fan (71) is in signal connection with the fan backplane (72), and the fan backplane (72) is inserted into and matched with one of the plurality of heat dissipation control connectors (55).

5. The multi-node server architecture according to claim 3, wherein the server chassis (1) comprises a first mounting cavity (a) located at a front side of the middle backplane module (5) and a second mounting cavity (b) located at a rear side of the middle backplane module (5), wherein the central processing unit node (2), the data switching node (3) and the graphics processing unit node (4) are all mounted in the first mounting cavity (a), and the plurality of power modules (6) and the plurality of heat dissipation modules (7) are both mounted in the second mounting cavity (b).

6. The multi-node server architecture according to claim 5, wherein a first mounting rail assembly (11), a second mounting rail assembly (12) and a third mounting rail assembly (13) are disposed on a side wall of the server chassis (1) in the first mounting cavity (a), wherein the central processing unit node (2) is slidably disposed on the first mounting rail assembly (11), the data switching node (3) is slidably disposed on the second mounting rail assembly (12), and the graphics processing unit node (4) is slidably disposed on the third mounting rail assembly (13).

7. The multi-node server architecture according to claim 6, wherein part or all of the first mounting rail assembly (11), the second mounting rail assembly (12) and the third mounting rail assembly (13) are guide rails extending along a depth dimension direction of the server chassis (1) or a plurality of rollers distributed in the depth dimension direction of the server chassis (1).

8. The multi-node server architecture according to claim 6, wherein the first mounting cavity (a) is further provided with a mounting tray (14) connected to two side walls of the server chassis (1), wherein the mounting tray (14) is configured to support the data switching node (3).

9. The multi-node server architecture according to claim 5, wherein a plurality of power bins (15) are disposed on a side wall of the server chassis (1) in the second mounting cavity (b), a plurality of heat dissipation bins (16) are disposed between two side walls of the server chassis (1) in the second mounting cavity (b), wherein the plurality of power modules (6) are slidably inserted into the plurality of power bins (15) in a vertical posture, and the plurality of heat dissipation modules (7) are slidably inserted into the plurality of heat dissipation bins (16).

10. The multi-node server architecture according to claim 9, wherein an inner wall of each of the plurality of heat dissipation bins (16) is connected to an elastic baffle (17), wherein the elastic baffle (17) is configured to seal the heat dissipation bin (16) corresponding to the elastic baffle (17) by means of elastic restoration when one of the plurality of the heat dissipation modules (7) is extracted.

11. The multi-node server architecture according to claim 1, wherein the central processing unit node (2) comprises a first base (21) and a first mainboard (22) disposed in the first base (21), wherein a rear end of the first mainboard (22) is provided with a first node connector (23), and the first node connector (23) is configured to be connected to the first connector (51).

12. The multi-node server architecture according to claim 11, wherein the central processing unit node (2) further comprises a first front window (24) disposed at a front end of the first base (21), and a side of the first front window (24) is provided with a first operating handle (25) which is rotatable.

13. The multi-node server architecture according to claim 1, wherein the data switching node (3) comprises a second base (31) and a second mainboard (32) disposed in the second base (31), wherein a rear end of the second mainboard (32) is provided with a plurality of second node connectors (33), and the plurality of the second node connectors (33) are configured to be connected to the plurality of second connectors (52).

14. The multi-node server architecture according to claim 13, wherein the data switching node (3) further comprises a function extension module (34) disposed in the second base (31), and a front end of the second mainboard (32) is provided with an extension connector (35), wherein the function extension module (34) is inserted into and matched with the extension connector (35).

15. The multi-node server architecture according to claim 13, wherein an outer side wall of the second base (31) is provided with a second slide rail (36) extending along a depth dimension direction of the second base (31), and the second slide rail (36) is configured to cooperate with a second mounting rail assembly (12) disposed on a side wall of the server chassis (1).

16. The multi-node server architecture according to claim 13, wherein a front end of the side wall of the second base (31) is provided with a second transitional connecting plate (37), wherein the second transitional connecting plate (37) is provided with a second operating handle (38) which is tiltable, and a second limiting post (39) configured to abut against the second operating handle (38) at a preset tilting position.

17. The multi-node server architecture according to any one of claims 1 to 16, wherein the graphics processing unit node (4) comprises a third base (41) and a third mainboard (42) disposed in the third base (41), wherein a rear end of the third mainboard (42) is provided with a plurality of third node connectors (43), and the plurality of third node connectors (43) are configured to be connected to the plurality of third connectors (53).

18. The multi-node server architecture according to claim 17, wherein the graphics processing unit node (4) further comprises a third top cover (44) inverted on the third base (41), wherein both sides of the third base (41) are vertically provided with low folded edges (45), and side plates on both sides of the third top cover (44) are detachably connected to the low folded edges (45) corresponding to the side plates respectively.

19. The multi-node server architecture according to claim 17, wherein an outer side wall of the third base (41) is provided with a third slide rail (46) extending along a depth dimension direction of the third base (41), and the third slide rail (46) is configured to cooperate with a third mounting rail assembly (13) disposed on a side wall of the server chassis (1).

20. The multi-node server architecture according to claim 17, wherein a front end of a side wall of the third base (41) is provided with a third transitional connecting plate (47), wherein the third transitional connecting plate (47) is provided with a third operating handle (48) which is tiltable, and a third limiting post (49) configured to abut against the third operating handle (48) at a preset tilting position.

21. The multi-node server architecture according to claim 20, wherein a front end of the third base (41) is provided with a third front window (410), and the third operating handle (48) is provided with a locking member (411) detachably connected to the third front window (410) and configured to lock the third operating handle (48) on the third front window (410) when the third operating handle (48) is not tilted.

22. The multi-node server architecture according to claim 21, wherein the third transitional connecting plate (47) is further provided with an elastic member (412) connected to a rotating shaft of the third operating handle (48) and configured to pretilt the third operating handle (48) by a preset angle through an elastic force when the locking member (411) is unlocked.

23. The multi-node server architecture according to claim 18, wherein a locking pin (413) which is pressable is protruding from an outer wall of a side plate of the third top cover (44), a limiting block (18) is protruding from an inner side wall of the server chassis (1), and the limiting block (18) is configured to abut against the locking pin (413).

24. The multi-node server architecture according to claim 23, wherein an inner end of the locking pin (413) is connected to an elastic strip (414), one end of the elastic strip (414) is connected to an inner wall of the side plate of the third top cover (44), a limiting plate (415) is disposed on the other end of the elastic strip (414) on the inner wall of the side plate of the third top cover (44), and the limiting plate (415) is configured to abut against the other end of the elastic strip (414).

25. The multi-node server architecture according to claim 3, wherein the middle backplane module (5) comprises a front backplane (56) and a rear backplane (57) which are connected into a whole, wherein the first connector (51), the plurality of second connectors (52), and the plurality of third connectors (53) are all disposed on the front backplane (56), and the plurality of power connectors (54) and the plurality of heat dissipation control connectors (55) are all disposed on the rear backplane (57).
